# EUROPEAN PATENT SPECIFICATION

(11) **EP 3 252 029 B1**
(45) Date of publication and mention of the grant of the patent: **11.08.2021**
(21) Application number: 17397514.5
(22) Date of filing: 02.06.2017
(51) Int. Cl.: C05F 17/907, C05F 17/964

(54) **FLEXIBLE INTERMEDIATE BULK CONTAINER AND COMPOSTING APPARATUS**
FLEXIBLER SCHÜTTGUTBEHÄLTER UND KOMPOSTIERUNGSVORRICHTUNG
CONTENEUR SEMI-VRAC FLEXIBLE ET APPAREIL DE COMPOSTAGE

(30) Priority: 02.06.2016 FI U20164126 U
(43) Date of publication of application: 06.12.2017
(73) Proprietor: HARXO OY, 38200 Sastamala (FI)
(72) Inventor: HARJULA, Jukka, 38200 Sastamala (FI)
(74) Representative: Salomäki, Juha Kari Ensio

(56) References cited:
- WO-A1-99/26899
- WO-A1-2013/163490
- WO-A2-03/024896
- AU-A- 4 214 693
- GB-A- 2 087 860
- US-A- 5 185 261

## Description

The object of the present invention is a composting apparatus as presented in claim 1.

The composting apparatus according to the invention, hereinafter referred to as "solution", is applicable e.g. for housing associations comprising a number of households producing compostable waste. The solution can also be advantageously applied e.g. for composting horse manure, dry manure, organic waste and other biodegradable materials.

The aim of the invention is to achieve an effective and inexpensive continuous-action composter solution for biodegradable waste that functions throughout the year. The solution according to the invention enables effective and continuous compost fermentation in an outdoor space also in a cold climate, such as in the winter weather conditions of Finland.

International climate and environmental protection accords as well as Finnish national waste management regulations require now, and will require in the future, ever more effective ways to sort and recycle waste. It is simplest and most inexpensive to treat the compostable waste of households near the site where the waste is produced e.g. by composting. In a cold climate, such as in Finland during the winter, a thermal composter with all-round insulation is needed for composting, and sufficient air for maintaining the fermentation process of composting must be conducted inside the composter.

Currently on the market are thermally-insulated thermal composters corresponding to the quantity of compostable waste produced by one, or at most four, households, but in larger housing associations, such as e.g. housing associations for apartment blocks, compostable wastes are normally placed in the housing association's compostable waste bin, which is emptied and processed further by a refuse management company.

A problem in small thermal composters is their small size. In a cold climate, e.g. during spells of sub-zero temperatures in the winter, the mass of compostable waste in a composter is not able to maintain sufficient heat and in many cases the fermentation process of the composter stops and the compost freezes. Also the starting of composting in cold weather will not succeed, because the composter cannot yet itself produce the heat needed for starting the fermentation process of the composter.

The emptying of modern commercial composters takes place with a shovel from the bottom part of the composter, which is a slow and laborious work phase and is inefficient and expensive when provided as a service.

Some closest prior art patent publications, like GB2087860A, WO03/024896A2, US5185261A, WO99/26899A1 and AU4214693A have tried to find solutions to the problems mentioned above. According to applicant, the present innovation has found the solutions to the above-mentioned problems and is therefore also novel and inventive comparing to said prior art publications.

The aim of the present invention is to eliminate the aforementioned drawbacks and to provide a reliable, effective and inexpensive solution, by means of which the compostable wastes of many households are composted all year round.

The composting apparatus according to the invention is characterized by what is disclosed in the characterization part of claim 1.

Other embodiments of the invention are characterized by what is disclosed in the other claims.

One advantage of the solution according to the invention is that the bulk containers used in the composting apparatus are sufficiently large in volume for the fermentation process of the composting apparatus to produce sufficient heat to maintain the process throughout the year also in a cold climate, such as in Finland in the wintertime. The composting apparatus can also be provided with a supplementary heating cable with which an adequate fermenting temperature can be assured for the composting apparatus during the coldest seasons of the year, when the temperature produced by the composting apparatus is not able to maintain the composting process. Preferably the supplementary heating cable has a power output of 100 W. Another advantage also is that the thermal insulation elements of the composting apparatus, such as the thermal insulation boards and the air insulation spaces, effectively keep cold air and drafts out of the compost. A further advantage is that the aeration and ventilation solution according to the invention effectively changes the air in the composting apparatus.

Another advantage also is that two or more bulk containers are used in the solution, in which solution after one bulk container has filled up, the start of composting in the empty bulk container is effective also in cold weather because a fermentation process producing heat is taking place in the adjacent full bulk container, said process providing heat also to the side of the empty and/or partly filled emptier bulk container, enabling the start of a new composting fermentation process when compostable waste gradually collects in the new bulk container. Good heat production and heat transfer from one bulk container to another bulk container also speeds up the composting of the compostable waste mass while also shortening the interval for emptying the compost. Another advantage also is that the ventilation duct is in the middle of the bulk containers and thus cold replacement air is warmed as it enters the compost.

Another advantage is that servicing of the composting apparatus according to the invention is simple, easy and inexpensive and is also a very suitable task for a servicing company to perform. The servicing company adds drying agent to the composting apparatus at certain regular intervals, levels and turns the compost mass in the bulk container and removes possible surplus rubbish from the compostable waste. In this case the end result is clean compost mass of good quality.

A full bulk container is left to compost and is only emptied when the new bulk container has become full of compostable waste mass. A full bulk container is easy to remove from the composting apparatus from the lifting handles of the bulk container with the hoists of a pickup truck and to empty e.g. onto the tailbed. The thermal insulation boards on the outer edge of a bulk container are integrated with an easy fastening into attachment with the bulk container so that in the event of the bulk container breaking, the thermal insulation boards can easily be transferred to a new bulk container.

A further advantage is also that compostable waste is separable from the body of mixed waste also in areas of residential apartment buildings or in shared use in villages, while also improving the quality of the mixed waste. The composting of compostable waste also takes place near the households, and the compostable waste does not need to be moved elsewhere for processing.

Another advantage is that the manufacturing costs of the composting apparatus are advantageous because the shell elements, frames, halves and lid of the composting apparatus are simple and inexpensive to fabricate e.g. by means of an injection mold.

In the following the invention will be described in more detail by the aid of one example of its embodiment with reference to the attached drawings, wherein
- Fig. 1: presents a simplified and partially sectioned view of one flexible intermediate bulk container composting apparatus to be used in the solution according to the invention, as seen obliquely from the side and from above,
- Fig. 2: presents a simplified view of one flexible intermediate bulk container to be used in the solution according to the invention, as seen obliquely from the front and from above, into which a thermal insulation unit has been integrated and which is partially sectioned,
- Fig. 3: presents a flexible intermediate bulk container composting apparatus installed in the ground and in use, as viewed from the direction A of Fig. 1 and sectioned along the center line of the composting apparatus,
- Fig. 4: presents a flexible intermediate bulk container composting apparatus installed in the ground and in a servicing state, as viewed from the partially empty flexible intermediate bulk container side, from direction B of Fig. 1 and sectioned in front of the dividing wall of the composting apparatus in such a way that the inner wall of the partly empty flexible intermediate bulk container is visible and partially sectioned.

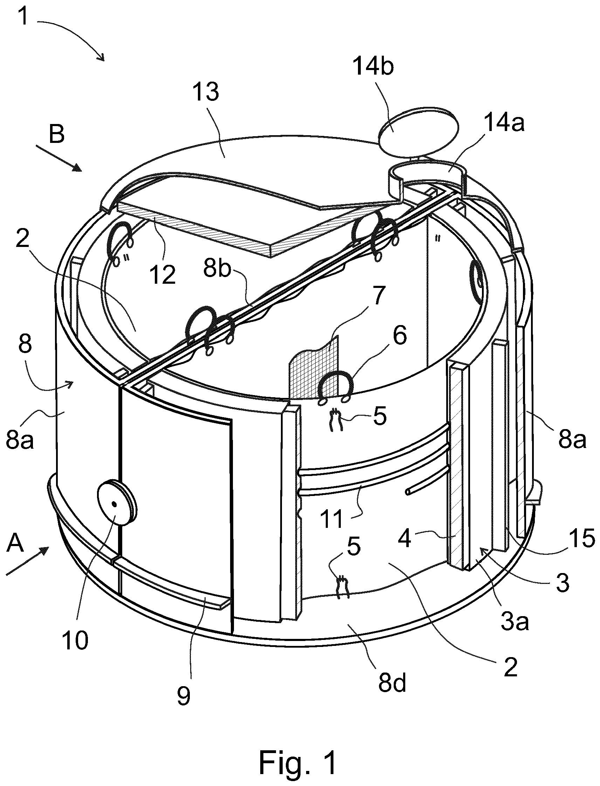

Fig. 1 presents a simplified and partially sectioned view of one bulk container composting apparatus 1 according to the invention, hereinafter referred to as composting apparatus 1. The core of the composting apparatus 1 comprises two, essentially cylindrical, bulk containers 2, i.e. a first bulk container 2 and a second bulk container 2. One bulk container 2 forms one independent composting compartment. The bulk containers 2 have strong lifting lugs 6, for moving the bulk container 2, and also a ventilation net 7. Integrated onto the outer edges of the bulk containers 2 are thermal insulation units 3 with thermal insulation pockets 3a, inside which are disposed one or more thermal insulation elements 4.

The embodiment according to Fig. 1 presents separate thermal insulation units 3, in case a bulk container 2 might wear or be damaged in longer-term use, in which case it can be replaced with a new, inexpensive, bulk container 2 in the thermal insulation unit 3. The thermal insulation unit 3 is integrated into the bulk container 2 with fastening means 5. A simple tape, for example, is used as the fastening means 5, which is attached to the bulk container 2 and the tapes are bound with a secure knot in loops disposed in the thermal insulation unit 3. On top of the bulk containers 2 and the thermal insulation units 3 in the composting apparatus 1 are upper thermal insulation boards 12. Supplementary heating cables 11 are installed between the thermal insulation units 3 and the bulk containers 2, in the center part of the composting apparatus 1, the cables circling a number of times, e.g. 3 times, around the bulk containers 2. A supplementary heating cable 11 can be used if the temperature of the outdoor air drops to be too low and there is a risk that the heat produced by the composting apparatus 1 itself will not be able to maintain the composting process. Preferably the supplementary heating cable 11 has a power output of 100 W.

The bulk containers 2 are situated side by side in the composting apparatus 1, which comprises two shell elements 8 of semicylindrical shape, a base 8d, a ring-shaped flange 9 extending outwards from the shell elements 8, and a fresh air valve 10. The shell elements 8 comprise an outer rim 8a and a perforated inner wall 8b. The outer rims 8a of the shell elements 8 are in contact with the outdoor air and the inner walls 8b are against each other. Spacer ribs 15 keeping the thermal insulation units 3 at a certain distance from the inside surface of the outer rims 8a are fastened to the inside surfaces of the outer rims 8a. On top of the composting apparatus, supported by the shell elements 8, is an upper thermal insulation 12 and a lid structure, which comprises a two-piece lid 13 in which is also a filling aperture 14a for the composting apparatus and a filling aperture lid 14b.

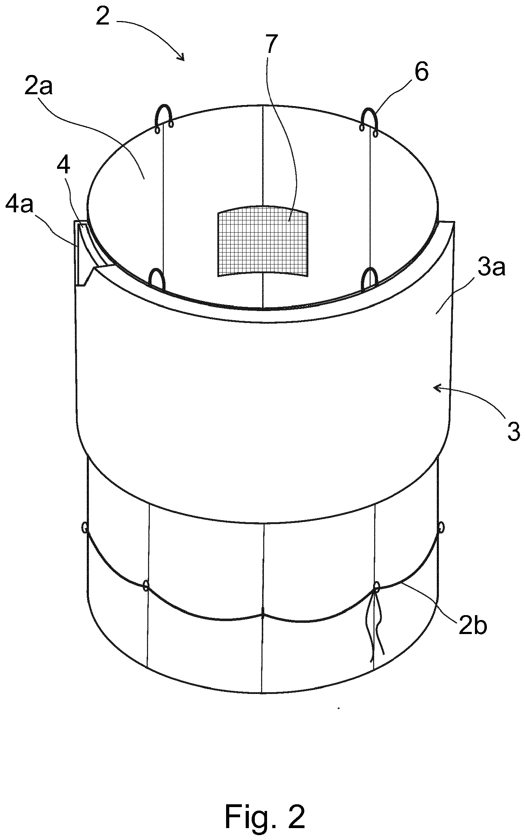

Fig. 2 presents one essentially cylindrical bulk container 2, the first end of which, i.e. the top end, is open and the second end, i.e. the bottom end is closable, and which comprises a cylindrical envelope 2a, lifting handles 6, a ventilation net 7, closing means 2b for the base, and an integratable thermal insulation unit 3 having a thermal insulation pocket 3a inside which is a thermal insulation element 4. The thermal insulation pocket 3a is closed at its second end with a closer, such as e.g. with Velcro tape or with a zip fastener. A thermally-insulating air space 4a also remains inside the thermal insulation pocket 3a. In order for the thermal insulation elements 4 to be well seated on the inner edges of the outer rims 8a of the shell elements 8 of the composting apparatus 1, it is advantageous to use a flexible thermal insulation material as the material of the thermal insulation element 4 in the thermal insulation pocket 3a of the thermal insulation unit 3, such as e.g. cellular plastic, the thickness of which can be e.g. 25 mm, but the thickness and material can, however, be selected according to need. It is advantageous to use as material for the thermal insulation pocket 3a of the thermal insulation unit 3 the same flexible and durable material as that used for the bulk containers 2.

In Fig. 2 the second end of the bulk container 2, i.e. the bottom end, is open, in which case the closing means 2b of the base, such as e.g. a fastening rope, has not been set to close the base of the bulk container 2. At the first end of the bulk container 2 a thermal insulation unit 3 is integrated into a half-arc shape, in which case the second half-arc of the first end is uninsulated. In the final installation, in which two bulk containers 2 are installed in the composting apparatus 1 side by side, the parts of the bulk containers 2 provided with thermal insulation units 3 uniformly cover the inside surfaces of the outer rims 8a of the whole shell elements 8. Correspondingly, the uninsulated envelope parts of the bulk containers 2 settle inside the composting apparatus 1 against the inside walls 8b of the shell elements 8, enabling heat transfer between the bulk containers 2 via the holes 8c of the inside walls 8b.

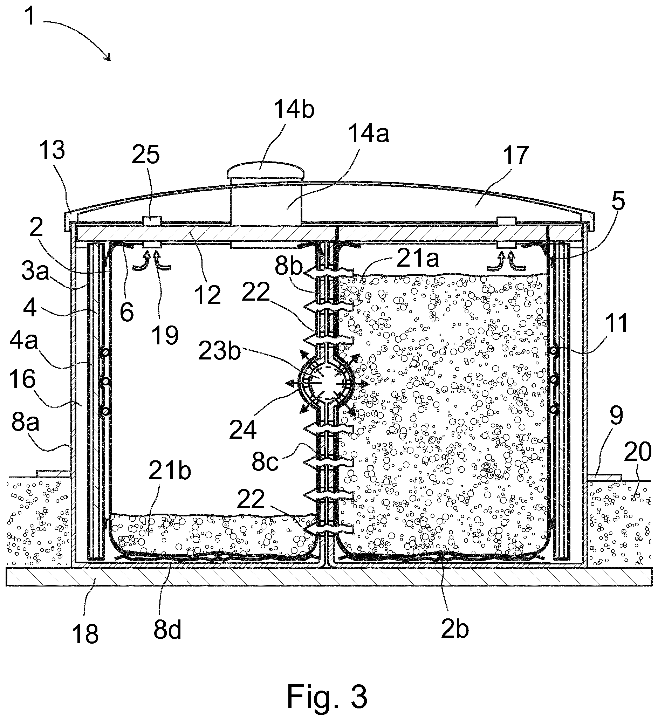

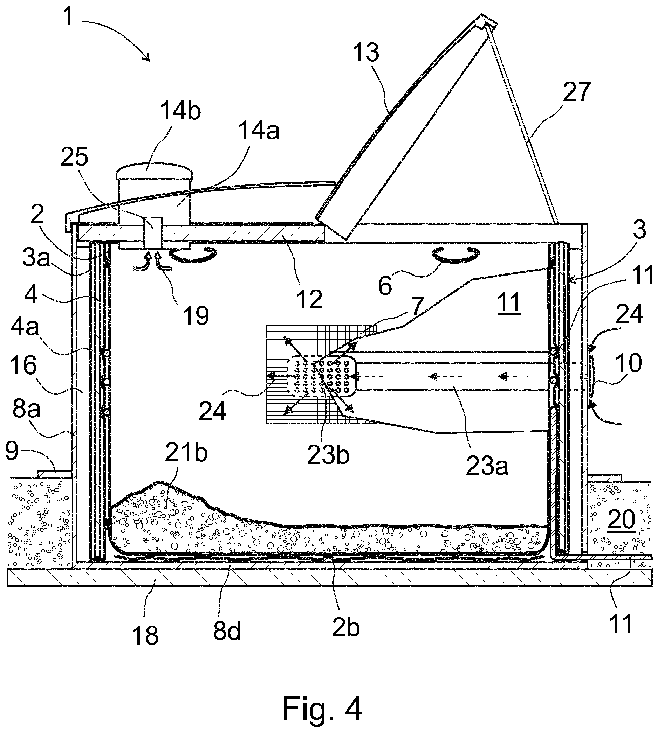

Figs. 3 and 4 present simplified sectioned diagrams as viewed from the side and from two different directions. In the situation presented by Fig. 3, the composting apparatus 1 is installed in the ground and in an operating state, and in Fig. 4 the composting apparatus 1 is in a servicing state. The view in Fig. 3 is from the direction A between the two bulk containers 2, i.e. from the direction of the fresh air valve 10, and the view in Fig. 4 is from the direction of the emptier bulk container 2 in use, i.e. from the direction B and the bulk container 2 is partially sectioned. The bulk containers 2 are closed at their second end with closing means 2b, by the aid of which a base is formed in the bulk containers 2.

The composting apparatus 1 is embedded in the ground 20 in such a way that that external flange 9 of the shell elements 8 rests on the ground 20. A lower thermal insulation board 18, such as e.g. ground frost insulation, is installed below the composting apparatus 1 to insulate against cold rising from underground. Preferably the composting apparatus 1 is embedded to a depth of approx. 40 centimeters, in which case the lower thermal insulation improves and both the operating height and servicing height of the composting apparatus 1 is suitable. In addition to the thermal insulation units 3 and thermal insulation boards 12 and 18, the composting apparatus solution has air insulation spaces 16, 17 essentially on the sides and top of it. Spacer ribs 15, which are fastened to the inside surfaces of the outer rims 8a, keep the bulk containers 2 at a certain distance from the inside surfaces of the outer rims 8a, enabling an air insulation space 16 between the inside surfaces and the envelope of the bulk containers 2. The air insulation space 16 is most preferably over 3 centimeters thick. An upper air insulation space 17 remains between the upper thermal insulation 12 and the lid 13.

Figs. 3 and 4 present a situation in which the first bulk container 2 has become full of compostable waste 21a and composting of compostable waste 21b has started in the second bulk container 2. The fermenting process of the compost of the compostable waste 21b of the full first bulk container 2 produces a lot of thermal energy, which is transferred by heat transfer 22 to the side of the second emptier bulk container 2 via the apertures 8c made in the inside walls 8b of the shell parts 8, enabling the start of the composting process for the new compostable waste 21b in the emptier bulk container 2. New fresh air 24 flows into the composting apparatus 1 via the fresh air valve 10 and fresh air pipe 23a, the new air warming between the bulk containers 2 and discharging into the composting apparatus 1 via the perforated fresh air spreader 23b. Air 24 spreads through the apertures made in the inside walls 8b and through the ventilation net 7 of the bulk containers 2 into the compostable waste 21a, 21b and thus into the fermenting process of the composting. In the upper thermal insulation 12 there are ventilation pipes 25 at the point of both bulk containers 2, via which ventilation pipes 25 the gases produced in composting escape to under the lid 13 of the composting apparatus 1. The ventilation pipes 25 are situated under the lid 13, in which case a draft of cold outdoor air is unable to enter the composting apparatus via the ventilation pipes 25 and at the same time the upper air insulation 17 receives heat from inside the composting apparatus 1. Composting apparatus gases 19 exit into the outdoor air from the gap between the lid 13 and the shell elements 8.

Fig. 4 presents a composting apparatus 1 in a servicing state, when the second half of the lid 13 of the composting apparatus 1 has been raised into the upper position and supported to stay up by means of a lid support 27. At certain intervals, preferably at intervals of 1-2 weeks, a composting apparatus 1 in use must be serviced by adding drying agent to the mix of compostable waste 21b as well as by turning and leveling the compostable waste 21b that has accumulated below the filling aperture 14a of the bulk container 2 so that it is evenly spread across the whole area of the bulk container 2. At the same time rubbish and other undesirable impurities are removed from the compostable waste 21b, thus improving the quality of the compost mass being produced.

The composting apparatus 1 and solution according to the invention effectively utilize the thermal energy produced in the fermentation process of composting compostable waste and the transfer of the thermal energy thus produced from the warmer composter compartment, such as from the first bulk container 2, to the colder composter compartment, such as to the second bulk container 2, in which at this stage there is less compostable waste than in the first bulk container 2, which is full and in which the fermentation process producing heat is still ongoing.

According to the embodiment in question the composting apparatus 1 is more particularly suited for use by the housing associations formed of many, such as e.g. 15-20, households. It is advantageous to leave servicing of the composting apparatus 1 to a professional, such as to a servicing company. The full first bulk container 2 is easy to lift from the lifting handles 6 of the bulk container 2 e.g. with the hoists of a pickup truck and is easy to empty e.g. onto the tailbed of the pickup truck. The compostable waste 21a of the first bulk container 2 is composted *in situ* and it is emptied only when the second bulk container 2 becomes full. In this way, the emptying rhythm of the bulk containers 2 continues onwards.

It is obvious to the person skilled in the art that the invention is not limited solely to the embodiments described above, but that it may be varied within the scope of the claims presented below. Thus, for example, some solutions can be implemented in a different manner or with different materials than what is presented above and, in addition, some solutions can be absent and some solutions not presented can be included. One appropriate example is that the bulk containers and composting apparatus can be different in their exterior shapes than the cylindrical cross-sectional shape according to the embodiment. In such a case, the bulk containers and composting apparatus can be e.g. of rectangular shape, or of a rectangular shape provided with rounded corners, in their cross-section.

It is additionally obvious to the person skilled in the art that the thermal insulation materials used in the thermal insulation unit of a bulk container can be other than thermal insulation boards, such as e.g. extrudable thermal insulation mass or foam or fibrous thermal insulation.

It is further obvious to the person skilled in the art that the solution according to the invention can also be advantageously applied, in addition to the embodiment presented above, e.g. for composting horse manure, desiccated manure, organic waste and other biodegradable materials.

## Claims

1. Composting apparatus (1), which comprises an internal space bounded by the outer rims (8a) of the shell elements (8) surrounding the internal space, a base (8d), two flexible intermediate bulk containers (2) and a lid structure, and inside which composting apparatus at least between the outer rims (8a) and the compost mass to be formed from compostable waste is thermal insulation, **characterized in that** the two flexible intermediate bulk containers (2) form composting compartments, separated from each other, are fitted into the internal space of the composting apparatus (1), the compartments being for the compost masses to be formed from compostable waste (21a, 21b), and **in that** thermal transfer (22) is arranged between the composting compartments from the warmer compartment to the colder compartment.

2. Composting apparatus (1) according to claim 1, **characterized in that** the two flexible intermediate bulk containers (2) are fitted into the internal space of the composting apparatus (1), which flexible intermediate bulk containers (2) comprise a thermally-insulated envelope part and an uninsulated envelope part, and **in that** the uninsulated envelope parts of the flexible intermediate bulk containers (2) are oriented towards each other allowing the transfer (22) of heat between the flexible intermediate bulk containers (2), and **in that** the thermally-insulated envelope parts of the flexible intermediate bulk containers (2) are arranged to together form thermal insulation towards the outer rims (8a) of the shell elements (8) of the composting apparatus.

3. Composting apparatus (1) according to claim 1 or 2, **characterized in that** on the rim of the inside surfaces of the outer rims (8a) of the shell elements (8) at a distance from each other are essentially vertical spacer ribs (15), which are arranged to keep the thermally-insulated envelope part of the flexible intermediate bulk container (2) at the desired distance from the inside surfaces of the outer rims (8a) and to form an air insulation space (16) between the side wall (8) and the thermally-insulated envelope part of the flexible intermediate bulk container (2).

4. Composting apparatus (1) according to claim 1, 2 or 3, **characterized in that** arranged between the face-to-face, thermally-uninsulated envelope parts of the flexible intermediate bulk containers (2) are a fresh air pipe (23a) and a fresh air spreader (23b), which are arranged to bring outdoor air (24) into both flexible intermediate bulk containers (2) via a fresh air valve (10), and **in that** disposed in the upper thermal insulation (12) at the point of both flexible intermediate bulk containers (2) is a ventilation pipe (25), via which composting apparatus gases (19) are arranged to be released into the upper air insulation space (17) disposed below the lid (13).

5. Composting apparatus (1) according to any of claims 1-4, **characterized in that** between the flexible intermediate bulk containers (2) and the thermal insulation units (3) is a supplementary heating cable (11).

## Patentansprüche

1. Kompostiervorrichtung (1), die einen Innenraum, der durch die äußeren Ränder (8a) der den Innenraum umgebenden Schalenelemente (8) begrenzt ist, einen Boden (8d), zwei flexible Schüttgut-Zwischenbehälter (2) und eine Deckelstruktur aufweist, und in der zumindest zwischen den äußeren Rändern (8a) und der aus kompostierbaren Abfällen zu bildenden Kompostmasse eine Wärmeisolierung vorhanden ist, **dadurch gekennzeichnet, dass** die beiden flexiblen Schüttgut-Zwischenbehälter (2) voneinander getrennte Kompostierabteile bilden, die in den Innenraum der Kompostiervorrichtung (1) eingepasst sind, wobei die Abteile für die aus kompostierbaren Abfällen zu bildenden Kompostmassen (21a, 21b) vorgesehen sind, und dass zwischen den Kompostierabteilen eine Wärmeübertragung (22) von dem wärmeren Abteil zu dem kälteren Abteil angeordnet ist.

2. Kompostiervorrichtung (1) nach Anspruch 1, **dadurch gekennzeichnet, dass** die beiden flexiblen Schüttgut-Zwischenbehälter (2) in den Innenraum der Kompostiervorrichtung (1) eingepasst sind, wobei die flexiblen Schüttgut-Zwischenbehälter (2) einen wärmeisolierten Hüllenteil und einen unisolierten Hüllenteil umfassen, und dass die nicht isolierten Hüllenteile der flexiblen Schüttgut-Zwischenbehälter (2) zueinander hin ausgerichtet sind, um die Übertragung (22) von Wärme zwischen den flexiblen Schüttgut-Zwischenbehältern (2) zu ermöglichen, und dass die wärmeisolierten Hüllenteile der flexiblen Schüttgut-Zwischenbehälter (2) so angeordnet sind, dass sie zusammen eine Wärmeisolierung zu den Außenrändern (8a) der Schalenelemente (8) der Kompostiervorrichtung hin bilden.

3. Kompostiervorrichtung (1) nach Anspruch 1 oder 2, **dadurch gekennzeichnet, dass** an den Rändern der Innenflächen der Außenränder (8a) der Schalenelemente (8) in einem Abstand voneinander im Wesentlichen vertikale Abstandsrippen (15), die so angeordnet sind, dass sie den wärmeisolierten Hüllenteil des flexiblen Schüttgut-Zwischenbehälters (2) in dem gewünschten Abstand zu den Innenflächen der Außenränder (8a) halten und einen Luftisolationsraum (16) zwischen der Seitenwand (8) und dem wärmeisolierten Hüllenteil des flexiblen Schüttgut-Zwischenbehälters (2) bilden.

4. Kompostiervorrichtung (1) nach Anspruch 1, 2 oder 3, **dadurch gekennzeichnet, dass** zwischen den einander zugewandten, wärmeisolierten Hüllenteilen der flexiblen Schüttgut-Zwischenbehälter (2) ein Frischluftrohr (23a) und ein Frischluftverteiler (23b) angeordnet sind, die dazu eingerichtet sind, Außenluft (24) über ein Frischluftventil (10) in beide flexiblen Schüttgut-Zwischenbehälter (2) einzubringen, und dass in der oberen Wärmedämmung (12) an der Spitze der beiden flexiblen Schüttgut-Zwischenbehälter (2) ein Entlüftungsrohr (25) angeordnet ist, über das die Gase (19) der Kompostiervorrichtung in den oberen, unter dem Deckel (13) angeordneten Luftisolationsraum (17) abgegeben werden können.

5. Kompostiervorrichtung (1) nach einem der Ansprüche 1-4, **dadurch gekennzeichnet, dass** zwischen den flexiblen Schüttgut-Zwischenbehältern (2) und den Wärmedämmeinheiten (3) ein Zusatzheizkabel (11) angeordnet ist.

## Revendications

1. Appareil de compostage (1), qui comprend un espace interne limité par les bords externes (8a) des éléments de coque (8) entourant l'espace interne, une base (8d), deux conteneurs pour vrac intermédiaires souples (2) et une structure de couvercle, et à l'intérieur dudit appareil de compostage au moins entre les bords externes (8a) et la masse de compost à former à partir de déchets compostables se trouve une isolation thermique, **caractérisé en ce que** les deux conteneurs pour vrac intermédiaires souples (2) forment des compartiments de compostage, séparés l'un de l'autre, sont encastrés dans l'espace interne de l'appareil de compostage (1), les compartiments étant destinés à former des masses de compost à partir de déchets compostables (21a, 21b), et **en ce que** le transfert thermique (22) est arrangé entre les compartiments de compostage depuis le compartiment plus chaud au compartiment plus froid.

2. Appareil de compostage (1) selon la revendication 1, **caractérisé en ce que** les deux conteneurs pour vrac intermédiaires souples (2) sont encastrés dans l'espace interne de l'appareil de compostage (1), lesdits conteneurs pour vrac intermédiaires souples (2) comprennent une partie d'enveloppe thermiquement isolée et une partie d'enveloppe non isolée, et **en ce que** les parties d'enveloppe non isolées des conteneurs pour vrac intermédiaires souples (2) sont orientées l'une vers l'autre permettant le transfert (22) de chaleur entre les conteneurs pour vrac intermédiaires souples (2), et **en ce que** le des parties d'enveloppe isolée thermiquement des conteneurs pour vrac intermédiaires souples (2) sont arrangées pour former ensemble une isolation thermique vers les bords externes (8a) des éléments de coque (8) de l'appareil de compostage.

3. Appareil de compostage (1) selon la revendication 1 ou 2, **caractérisé en ce que**, sur le bord des surfaces intérieures des bords externes (8a) des éléments de coque (8), se trouvent des nervures d'espacement essentiellement verticales (15), qui sont arrangées pour maintenir la partie d'enveloppe thermiquement isolée du conteneur pour vrac intermédiaire souple (2) à la distance souhaitée des surfaces intérieures des bords externes (8a) et pour former un espace d'isolation d'air (16) entre la paroi latérale (8) et la partie d'enveloppe thermiquement isolée du conteneur pour vrac intermédiaire souple (2).

4. Appareil de compostage (1) selon la revendication 1, 2 ou 3, **caractérisé en ce que**, arrangés entre les parties d'enveloppe face à face et non isolées thermiquement des conteneurs de vrac intermédiaires souples (2), se trouvent un tuyau d'air frais (23a) et un diffuseur d'air frais (23b), qui sont arrangés pour amener de l'air extérieur (24) dans les deux conteneurs pour vrac intermédiaires souples (2) par l'intermédiaire d'une vanne d'air frais (10), et **en ce que** disposé dans l'isolation thermique supérieure (12) au point des deux conteneurs pour vrac intermédiaires souples (2) se trouve un tuyau de ventilation (25), par l'intermédiaire duquel des gaz (19) de l'appareil de compostage sont arrangés pour être libérés dans l'espace d'isolation d'air supérieur (17) disposé sous le couvercle (13).

5. Appareil de compostage (1) selon l'une quelconque des revendications 1 à 4, **caractérisé en ce que**, entre les conteneurs pour vrac intermédiaires souples (2) et les unités d'isolation thermique (3), se trouve un câble chauffant (11) supplémentaire.
